(19) Europäisches Patentamt
European Patent Office
Office européen des brevets

(11) **EP 3 182 083 B1**

(12) **EUROPÄISCHE PATENTSCHRIFT**

(45) Veröffentlichungstag und Bekanntmachung des Hinweises auf die Patenterteilung:
**19.09.2018 Patentblatt 2018/38**

(51) Int Cl.:
***G01K 1/02*** *(2006.01)*

(21) Anmeldenummer: **15201289.4**

(22) Anmeldetag: **18.12.2015**

(54) **MULTIPOINT-SENSOR ZUR BESTIMMUNG EINES BESTEHENDEN TEMPERATURPROFILS EINES MEDIUMS UND VERFAHREN ZU DESSEN HERSTELLUNG**

MULTI-POINT SENSOR FOR DETERMINING A TEMPERATURE PROFILE AND METHOD FOR PRODUCING THE SAME

CAPTEUR MULTIPOINT DE DETERMINATION D'UN PROFIL DE TEMPERATURE ET SON PROCEDE DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.06.2017 Patentblatt 2017/25**

(73) Patentinhaber: **ENDRESS + HAUSER WETZER GmbH + Co. KG**
**87484 Nesselwang (DE)**

(72) Erfinder:
• **Umkehrer, Alfred**
**87659 Hopferau (DE)**
• **Palma, Luca**
**20080 Zibido San Giaco (IT)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
DE-A1-102013 216 256    DE-U1-202011 001 277
DE-U1-202014 103 008

**Beschreibung**

Die Erfindung betrifft einen Multipoint-Sensor zur Bestimmung eines aus mehreren Messpunkten bestehenden Temperaturprofils eines Mediums. Des Weiteren betrifft die Erfindung ein Verfahren zur Herstellung des erfindungsgemäßen Multipoint-Sensors.

Temperatursensoren finden vielfach Anwendung im Bereich der Automatisierungstechnik, beispielsweise zur Erfassung der Temperatur eines Mediums in einer Rohrleitung und/oder in einem Behälter, oder in Feldgeräten, wie beispielsweise thermischen Durchflussmessgeräten zur Messung der Flussgeschwindigkeit und/oder der Dichte eines Mediums in einer Rohrleitung. Temperatursensoren umfassen eine temperatursensitive Komponente, beispielsweise einen Widerstandsthermometer oder ein Thermoelement, sowie Verkabelungen, wobei diese Bestandteile oftmals in ein Messrohr eingesetzt sind. Entsprechende Temperatursensoren und Feldgeräte werden von der Anmelderin hergestellt und vertrieben. Die zugrundeliegenden Messprinzipien der Temperatursensoren und der Feldgeräte sind aus einer Vielzahl von Veröffentlichungen bekannt.

Multipoint-Sensoren zur Temperaturmessung bestehen aus einer Vielzahl von einzelnen Temperatursensoren und ermöglichen das gleichzeitige Messen örtlich beabstandeter Messpunkte eines Temperaturprofils des Mediums.

Im industriellen Umfeld werden an die Temperatursensoren hohe Anforderungen in puncto Robustheit, Zuverlässigkeit und Messgenauigkeit gestellt. Zu diesem Zweck werden die Temperatursensoren, insbesondere bei Applikationen mit hohen Temperaturen, mit aggressiven Medien und/oder mit hohen Prozessdrücken, häufig in mineralisolierte Leitungen integriert. Als mineralisolierte Leitungen werden ummantelte Kabel bezeichnet, bei denen ein zu isolierendes Element, in diesem Fall ein oder mehrere Temperatursensoren, vollständig von einem keramischen Isolationsmaterial umgeben ist.

Mineralisolierte Leitungen werden für gewöhnlich durch mechanische Ziehverfahren hergestellt, mittels derer die gewünschte Form der Leitung nach einer Reihe von Deformationsschritten gebildet wird. Die Temperatursensoren werden vor dem Ziehverfahren in Keramikblöcke eingesetzt, die während der Ziehverfahrens zu einem Pulver zerstoßen werden. Dieses Pulver bildet das Isolationsmaterial und erlaubt eine Verbiegung der mineralisolierten Leitung bis zu einem bestimmten Grad.

Nachteilig an diesem Herstellungsverfahren ist, dass ausschließlich mechanisch robuste temperatursensitive Komponenten, wie beispielsweise Thermoelemente verwendet werden können. Weniger robuste Arten von temperatursensitiven Komponenten, wie beispielsweise Widerstandsthermometer würden aufgrund desrgroßen Kräfte, die während des Ziehverfahrens herrschen, beschädigt werden.

Ein grundlegender Nachteil mineralisolierter Leitungen besteht auch darin, dass das Isolationsmaterial den Wärmestrom von einem Prozessmedium zu dem jeweiligen in der Leitung befindlichen Temperatursensor verlangsamt. Eine Temperaturänderung des Prozessmediums wird somit zeitlich verzögert von dem jeweiligen Temperatursensor erfasst.

Im Falle eines Multipoint-Sensors, bei dem sich mehrere Temperatursensoren in der mineralisolierten Leitung befinden, ist zudem eine ortsgenaue Erfassung der einzelnen Messpunkte eines Temperaturprofils aufgrund des die Temperatursensoren umgebenden Isolationsmaterials schwierig.

DE202011001277 offenbart einen thermoelektrischen Temperaturfühler. Der Erfindung liegt die Aufgabe zugrunde, einen Multipoint-Sensor, welcher eine präzise Erfassung eines Temperaturprofils erlaubt, und ein einfaches Verfahren zu dessen Herstellung vorzustellen.

Die Erfindung wird durch einen Multipoint-Sensor zur Bestimmung eines aus mehreren Messpunkten bestehenden Temperaturprofils eines Mediums gelöst, bestehend aus

- einer rohrförmigen Ummantelung mit einem verschlossenen Endbereich;
- n zylinderförmigen Distanzhaltern mit n > 1, $n \in \mathbb{N}$, welche aus einem Material mit einer hohen Wärmeleitfähigkeit gefertigt sind,
  wobei der Außendurchmesser jedes Distanzhalters im Wesentlichen dem Innendurchmesser der Ummantelung entspricht,
  wobei die Distanzhalter hintereinander axial beabstandet in dem Innenraum der Ummantelung angeordnet sind,
  wobei jeder Distanzhalter eine Vertiefung zur Aufnahme jeweils einer temperatursensitiven Komponente eines länglichen Temperatursensors enthält, wodurch jeweils ein Messpunkt des Temperaturprofils erfasst wird, wobei jeder Distanzhalter mit Ausnahme des zu dem verschlossenen Endbereich am nächsten gelegenen Distanzhalters Durchbohrungen zum Durchführen der an den vorhergehenden Distanzhaltern befestigten länglichen Temperatursensoren aufweist,
  wobei durch eine Durchbohrung genau ein länglicher Temperatursensor geführt ist, so dass die Anzahl der Durchbohrungen eines Distanzhalters der Anzahl der vorhergehenden Distanzhalter entspricht; und
- einem Füllmaterial, welches zwischen den Distanzhaltern angeordnet ist und welches die länglichen Temperatursensoren jeweils umschließt, wobei das Füllmaterial eine geringere Wärmeleitfähigkeit als das Material der Distanzhalter aufweist.

Der Vorteil des erfindungsgemäßen Multipoint-Sensors liegt darin, dass ein ortsgenaues Temperaturprofil eines Mediums erfasst werden kann. Dadurch, dass das Material der Distanzhalter eine höhere thermische Leitfähigkeit als das zwischen den Distanzhaltern befindliche Füllmaterial aufweist, wird die unmittelbar an einem Messpunkt vorliegende Temperatur sehr präzise erfasst.

Die Distanzhalter sorgen nicht nur für eine gute Wärmeübertragung, sondern erleichtern auch ein Positionieren der Temperatursensoren in der Ummantelung.

Im Gegensatz zu den im Stand der Technik bekannten mineralisolierten Leitern, welche im einleitenden Teil der Beschreibung beschrieben sind, können in dem erfindungsgemäßen Multipoint-Sensor sowohl Thermoelemente als auch mechanisch weniger robuste temperatursensitive Komponenten, wie beispielsweise Widerstandsthermometer eingesetzt werden.

Der erfindungsgemäße Multipoint-Sensor kann in einer Vielzahl von Applikationen eingesetzt werden. Beispielsweise wird der Multipoint-Sensor in einem mit einem Medium gefüllten Behälter, in einer Rohrleitung oder in einer anderen, im einleitenden Teil der Beschreibung genannten Anwendung, eingesetzt.

In einer ersten Variante des erfindungsgemäßen Multipoint-Sensors ist vorgesehen, dass das Füllmaterial zusätzlich zwischen dem verschlossenen Endbereich der Ummantelung und dem dem verschlossenen Endbereich am nächsten gelegenen Distanzhalter angeordnet ist. Dadurch kann der dem verschlossenen Endbereich der Ummantelung nächstgelegene Distanzhalter und somit der erste Messpunkt des Temperaturprofils beabstandet von dem verschlossenen Endbereich angeordnet sein. Dies kann beispielsweise dann notwendig sein, wenn der verschlossene Endbereich mechanisch befestigt ist und dadurch nicht von dem Medium umströmt wird.

In einer weiteren Variante des erfindungsgemäßen Multipoint-Sensors ist vorgesehen, dass der dem verschlossenen Endbereich am nächsten gelegene Distanzhalter direkt an dem verschlossenen Endbereich positioniert ist. Dadurch lässt sich ein erster Messpunkt des Temperaturprofils unmittelbar auf Höhe des verschlossenen Endbereichs der Ummantelung erfassen. Durch direkten Kontakt mit dem meist metallischen Material des Endbereichs ist zudem eine gute Wärmeübertragung möglich.

In einer bevorzugten Ausgestaltung des erfindungsgemäßen Multipoint-Sensors sind die Distanzhalter aus einem thermisch leitfähigen keramischen Material gefertigt. Der Multipoint-Sensor ist über einen hohen Temperaturbereich einsetzbar, da Keramiken verglichen mit metallischen Materialien einen geringen Wärmeausdehnungskoeffizienten aufweisen.

In einer besonders bevorzugten Ausgestaltung des erfindungsgemäßen Multipoint-Sensors ist vorgesehen, dass es sich bei dem thermisch leitfähigen keramischen Material um Bornitrid handelt. Bornitrid, im Speziellen hexagonales Bornitrid mit einem Calciumborat-Anteil, weist im Vergleich zu den meisten anderen gebräuchlichen Keramiken eine sehr hohe Wärmeleitfähigkeit auf.

In einer vorteilhaften Weiterbildung des erfindungsgemäßen Multipoint-Sensors ist vorgesehen, dass es sich bei dem Füllmaterial um ein Pulver handelt. Die Verwendung eines Pulvers als Füllmaterial erlaubt ein Verbiegen des Multipoint-Sensors. Außerdem verhindert das Pulver Luftschichten zwischen den Distanzhaltern und verbessert die mechanische Stabilität des Multipoint-Sensors.

In einer bevorzugten Weiterbildung des erfindungsgemäßen Multipoint-Sensors ist vorgesehen, dass das Pulver aus einem keramischen Material besteht. Die meisten gebräuchlichen keramischen Materialien weisen eine hohe elektrische Durchschlagsfestigkeit auf. Die Temperatursensoren werden dadurch voneinander elektrisch isoliert.

In einer besonders bevorzugten Weiterbildung des erfindungsgemäßen Multipoint-Sensors ist vorgesehen, dass das Pulver aus Aluminiumoxid besteht. Im Gegensatz zu in den meisten gebräuchlichen mit einem Keramikmaterial isolierten Kabeln und Sensoren, welche Magnesiumoxid als Füllmaterial verwenden, ist Aluminiumoxid feinkörnig einsetzbar. Pulverförmiges Magnesiumoxid hingegen würde Verklumpungen bilden. Alternativ kann Hafniumdioxid als Füllmaterial verwendet werden.

In einer vorteilhaften Ausgestaltung des erfindungsgemäßen Multipoint-Sensors ist vorgesehen, dass die Ummantelung aus einem festen, biegsamen Material gefertigt ist, was ein Verbiegen des Multipoint-Sensors ermöglicht. Vorzugsweise wird ein dünnes metallisches Material verwendet. Ein metallisches Material bietet neben einer hohen Biegsamkeit einen guten Schutz des Multipoint-Sensors gegenüber aggressiven Messmedien. Als metallisches Material können beispielsweise Edelstähle der Sorte AISI 316, AISI 316L, AISI 316Ti, AISI 321 oder AISI 347 verwendet werden. Alternativ können die Legierungen Inconel600 oder Hastelloy X verwendet werden.

Des Weiteren wird die Erfindung durch ein Verfahren zur Herstellung des erfindungsgemäßen Multipoint-Sensors gelöst, umfassend die folgenden Schritte:

- Sukzessives Positionieren und Befestigen der temperatursensitiven Komponente der länglichen Temperatursensoren in der jeweiligen Vertiefung der Distanzelemente;

- Sukzessives Einsetzen der Distanzhalter in die Ummantelung derart, dass mit Ausnahme des zu dem verschlossenen Endbereich am nächsten gelegenen Distanzhalters durch jede der Durchbohrungen jeweils genau ein länglicher Temperatursensor geführt ist;

- Sukzessives Einfüllen des Füllmaterials zwischen zwei aufeinanderfolgenden Distanzhaltern, so dass das Füllmaterial die länglichen Temperatursensoren jeweils umschließt; und

- Verschließen der Ummantelung an ihrem dem geschlossenen Endbereich gegenüberliegenden offenen Endbereich.

Der Vorteil des erfindungsgemäßen Verfahrens liegt darin, dass während des Herstellungsverfahrens des Multipoint-Sensors keine Ziehverfahren verwendet werden. Dadurch lassen sich neben Thermoelementen auch sensiblere Sensorkomponenten, wie Widerstandsthermometern verwenden.

In einer bevorzugten Ausgestaltung des erfindungsgemäßen Verfahrens ist vorgesehen, dass für den Fall, dass es sich bei dem Füllmaterial um ein Pulver handelt, der Multipoint-Sensor während des Einfüllens und/oder nach jedem Einfüllen des Pulvers gerüttelt wird. Zum einen wird das Füllmaterial dadurch verdichtet, zum anderen werden während des Einfüllens entstanden Lufteinschlüsse aufgefüllt

In einer vorteilhaften Weiterbildung des erfindungsgemäßen Verfahrens ist vorgesehen, dass die Befestigung der jeweiligen temperatursensitiven Komponente eines länglichen Temperatursensors in der jeweiligen Vertiefung eines Distanzhalters mittels eines Klebstoffs, insbesondere mittels eines wärmeleitfähigen keramischen Klebstoffs, erfolgt. Bei dem keramischen Kleber handelt es sich bevorzugt um Zement oder auf einer auf Siliziumdioxid basierenden Keramikpaste.

In einer besonders vorteilhaften Ausgestaltung des erfindungsgemäßen Verfahrens ist vorgesehen, dass das Einfüllen des Füllmaterials mithilfe einer Kapillare erfolgt. Das Einfüllen des bevorzugt pulverförmigen Füllmaterials mittels einer Kapillare erfolgt präzise und kontrolliert, Einschließungen von Luft werden dadurch vermieden.

In einer ersten Variante des erfindungsgemäßen Verfahrens ist vorgesehen, dass das Füllmaterial zusätzlich zwischen dem verschlossenen Endbereich der Ummantelung und dem dem verschlossenen Endbereich am nächsten gelegenen Distanzhalter eingefüllt wird. Dadurch kann der dem verschlossenen Endbereich der Ummantelung nächstgelegene Distanzhalter und somit der erste Messpunkt des Temperaturprofils beabstandet von dem verschlossenen Endbereich angeordnet sein. Dies kann beispielsweise dann notwendig sein, wenn der verschlossene Endbereich mechanisch befestigt ist und dadurch nicht von Medium umströmt wird.

In einer weiteren Variante des erfindungsgemäßen Verfahrens ist vorgesehen, dass der dem verschlossenen Endbereich am nächsten gelegene Distanzhalter direkt an dem verschlossenen Endbereich positioniert wird. Dadurch lässt sich ein erster Messpunkt des Temperaturprofils unmittelbar auf Höhe des verschlossenen Endbereichs der Ummantelung erfassen. Durch direkten Kontakt mit dem meist metallischen Material des Endbereichs ist zudem eine gute Wärmeübertragung möglich.

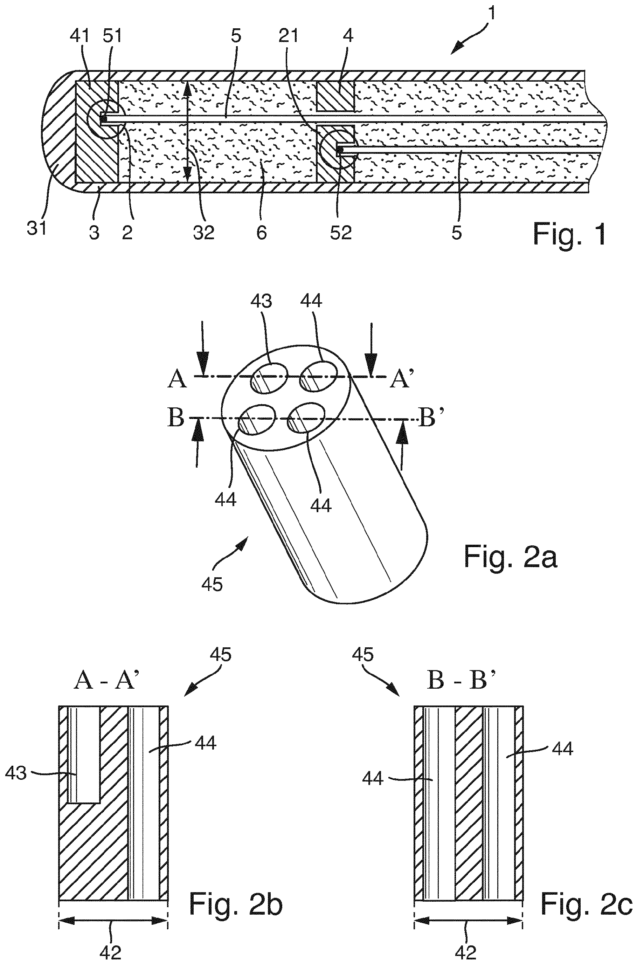

Die Erfindung wird anhand der nachfolgenden Figuren 1 und 2 näher erläutert. Es zeigen

Fig. 1: ein Ausführungsbeispiel eines erfindungsgemäßen Multipoint-Sensors; und

Fig. 2: eine Ausgestaltung eines Distanzelements des erfindungsgemäßen Multipoint-Sensors.

Fig. 1 zeigt ein Ausführungsbeispiel eines erfindungsgemäßen Multipoint-Sensors 1. Der Multipoint-Sensor 1 besteht aus einer rohrförmigen Ummantelung 3, welche bevorzugt aus einem metallischen Material gefertigt ist und einen geschlossenen Endbereich 31 aufweist. Im ursprünglichen Zustand ist der dem geschlossenen Endbereich 31 gegenüberliegende Endbereich offen.

Der Multipoint-Sensor 1 weist darüber hinaus zumindest zwei zylinderförmige Distanzhalter 41, 4 auf. In dem in Fig. 1 gezeigten Ausführungsbeispiel werden genau zwei Distanzhalter 41, 4 verwendet. Jeder der Distanzhalter 4, 41 weist eine Vertiefung 43 auf, in der jeweils eine temperatursensitive Komponente 51, 52 eines länglichen Temperatursensors 5 angebracht ist, welche jeweils einen Messpunkt 2 eines Temperaturprofils eines Mediums erfasst. Bei der temperatursensitiven Komponente 51, 52 kann es sich beispielsweise um einen Widerstandsthermometer oder um ein Thermoelement handeln.

Die Distanzhalter 4, 41 sind aus einem Material mit einer hohen Wärmeleitfähigkeit gefertigt, vorzugsweise einem keramischen Material wie Bornitrid. Hexagonales Bornitrid, welches zusätzlich einen Anteil Calciumborat enthält, weist im Gegensatz zu gebräuchlichen Keramiken eine sehr hohe Wärmeleitfähigkeit auf. Der Außendurchmesser 42 der Distanzhalter 4, 41 entspricht dabei im Wesentlichen dem Innendurchmesser 32 der Ummantelung 3, wodurch die Distanzhalter 4, 41 mit der Ummantelung 3 in Kontakt stehen. Durch diesen Kontakt und der hohen Wärmeleitfähigkeit der Distanzhalter 4, 41 wird die unmittelbar an dem Messpunkt 2 anliegende Temperatur des Mediums von der jeweiligen temperatursensitiven Komponente 51, 52 erfasst. Dadurch, dass keramische Materialien einen vergleichsweise niedrigen Wärmeausdehnungskoeffizienten aufweisen, bleibt dieser Kontakt über einen großen Temperaturbereich bestehen.

Zwischen den Distanzhaltern 4, 41 befindet sich ein Füllmaterial 6. Dieses ist vorzugsweise pulverförmig ausgestaltet und besteht aus einem keramischen Material, vorzugsweise Aluminiumoxid oder Hafniumdioxid. Das Füllmaterial 6 weist eine geringere thermische Leitfähigkeit als das Material der Distanzhalter 4, 41 auf. Dadurch wird gewährleistet, dass die unmittelbar an einem Messpunkt 2 vorliegende Temperatur sehr präzise erfasst wird.

Zur Herstellung des erfindungsgemäßen Multipoint-Sensors 1 wird zuerst die temperatursensitive Komponente 51 eines ersten länglichen Temperatursensors 5 in die Vertiefung 43 eines ersten Distanzhalters 41 eingesetzt und positioniert. Mithilfe eines Klebstoffs, vorzugsweise eines keramischen wärmeleitfähigen Klebstoffs wie beispielsweise Zement oder einer Keramikpaste auf Siliziumdioxidbasis wird die temperatursensitive Komponente 51 in der Vertiefung 43 befestigt.

Der erste Distanzhalter 41 wird anschließend durch den offenen Endbereich in die Ummantelung 3 eingeführt und positioniert. Der erste Distanzhalter 41 kann dabei beabstandet von dem geschlossenen Endbereich 31 der Ummantelung 3 positioniert werden, oder mit diesem in Kontakt gebracht werden.

Im nächsten Schritt wird das bevorzugt pulverförmige Füllmaterial 6 in die Ummantelung 3 eingefüllt und bildet eine erste Schicht über dem ersten Distanzhalter 41. Das Einfüllen des Füllmaterials 6 erfolgt dabei über eine Kapillare, durch die das Füllmaterial 6 gepumpt wird. Alternativ befinden sich an der Mantelfläche der Ummantelung 3 mehrere Einlässe, durch die das Füllmaterial 6 eingefüllt wird. Besagte Einlässe müssen nach Einfüllen des Füllmaterials 6 jedoch verschlossen werden, beispielsweise mittels eines Schweißverfahrens. Nach Einfüllen des Füllmaterials 6 wird der Multipoint-Sensor 1 gerüttelt, um eine Verdichtung und eine gute Verteilung des Füllmaterials 6 zu erzielen. Wird der erste Distanzhalter 41 beabstandet von dem geschlossenen Endbereich 31 der Ummantelung 3 positioniert, so wird vor dem Einsetzten des ersten Distanzhalters 41 eine Schicht des Füllmaterials 6 eingefüllt.

Im Anschluss daran wird ein zweiter Distanzhalter 4 mit einer befestigen temperatursensitiven Komponente 52 eines zweiten länglichen Temperatursensors in die Ummantelung 3 eingesetzt. Durch die erste Schicht des Füllmaterials 6 ist dieser beabstandet von dem ersten Distanzhalter 41 positioniert. Der zweite Distanzhalter 4 weist eine Durchbohrung auf, durch welche der stabförmige Temperatursensor 5 des ersten Distanzhalters 41 geführt wird.

Anschließend wird eine zweite Schicht des Füllmaterials 6 in die Ummantelung 3 eingefüllt. Das in Fig. 1 gezeigte Ausführungsbeispiel ist auf zwei Distanzhalter 4, 41 beschränkt. Der erfindungsgemäße Multipoint-Sensor ist allerdings nicht auf zwei Distanzhalter 4, 41 limitiert sondern erlaubt die Verwendung einer Vielzahl weiterer Distanzhalter, die nach dem beschriebenen Verfahren in dem Rohr positioniert werden. Die Anzahl der Durchbohrungen 44 eines Distanzhalters 4 entspricht dabei stets der Anzahl der vorhergehenden Distanzhalter 41.

Im abschließenden Verfahrensschritt wird die Ummantelung 3 an ihrem dem geschlossenen Endbereich 31 gegenüberliegenden offenen Endbereich verschlossen. Beispielsweise wird eine Abdeckhülse angeschweißt, durch die Kabel zum Kontaktieren der länglichen Temperatursensoren 5 geführt sind. Vor Anbringen dieser Abdeckhülse kann vorgesehen sein, mit einem leichten axialen Druck in Richtung des geschlossenen Endbereichs 31 eine weitere Verdichtung des Füllmaterials 6 zu erzielen. Abschließend kann vorgesehen sein, diesen Endbereich mittels eines Harzes zu versiegeln.

Fig. 2 zeigt eine Ausgestaltung eines Distanzhalters 45 des erfindungsgemäßen Multipoint-Sensors 1. Fig. 2a) zeigt dabei eine perspektivische Ansicht des Distanzhalters 45, Fig. 2b) und Fig. 2c) zeigen jeweils einen Querschnitt des Distanzhalters 45. Der Distanzhalter 45 weist eine Vertiefung 43 zur Aufnahme und Positionierung einer temperatursensitiven Komponente 51, 52 eines länglichen Temperatursensors 5 auf, sowie drei Durchbohrungen 44 zum Durchführen der länglichen Temperatursensoren der vorhergehenden Distanzhalter 41 auf.

In diesem in Fig. 2 gezeigten Ausführungsbeispiel befinden sich drei weitere, nicht abgebildete Distanzhalter zwischen dem Distanzhalter 45 und dem geschlossenen Endbereich 31 der Ummantelung 3. An jedem dieser drei weiteren Distanzhalter ist ebenfalls jeweils ein länglicher Temperatursensor 5 befestigt. Die drei länglichen Temperatursensoren 5 der drei Distanzhalter sind durch die Durchbohrungen 44 des Distanzhalters 45 geführt.

Der erfindungsgemäße Multipoint-Sensor 1 kann in einer Vielzahl von Applikationen eingesetzt werden. Beispielsweise wird der Multipoint-Sensor 1 in einem mit einem Medium gefüllten Behälter, in einer Rohrleitung oder in einer anderen, im einleitenden Teil der Beschreibung genannten Anwendung, eingesetzt.

Ebenso ist der erfindungsgemäße Temperatursensor 1 nicht auf die beschriebenen Ausgestaltungen und Beispiele beschränkt.

## Bezugszeichenliste

| | |
|---|---|
| 1 | Multipoint-Sensor |
| 2, 21 | Messpunkte des Temperaturprofils |
| 3 | Ummantelung |
| 31 | verschlossener Endbereich der Ummantelung |
| 32 | Innendurchmesser der Ummantelung |
| 4, 41, 45 | zylinderförmiger Distanzhalter |
| 42 | Außendurchmesser eines Distanzhalters |
| 43 | Vertiefung |
| 44 | Durchbohrung |
| 5 | länglicher Temperatursensor |
| 51, 52 | temperatursensitive Komponente |
| 6 | Füllmaterial |

## Patentansprüche

1. Multipoint-Sensor (1) zur Bestimmung eines aus mehreren Messpunkten (2, 21) bestehenden Temperaturprofils eines Mediums, bestehend aus

    - einer rohrförmigen Ummantelung (3) mit einem verschlossenen Endbereich (31);

- n zylinderförmigen Distanzhaltern (4, 41) mit n > 1, $n \in \mathbb{N}$, welche aus einem Material mit einer hohen Wärmeleitfähigkeit gefertigt sind, wobei der Außendurchmesser (42) jedes Distanzhalters (4, 41) im Wesentlichen dem Innendurchmesser (32) der Ummantelung (3) entspricht, wobei die Distanzhalter (4, 41) hintereinander axial beabstandet in dem Innenraum der Ummantelung (3) angeordnet sind, wobei jeder Distanzhalter (4, 41) eine Vertiefung (43) zur Aufnahme jeweils einer temperatursensitiven Komponente (51, 52) eines länglichen Temperatursensors (5) enthält, wodurch jeweils ein Messpunkt (2, 21) des Temperaturprofils erfasst wird, wobei jeder Distanzhalter (4) mit Ausnahme des zu dem verschlossenen Endbereich (31) am nächsten gelegenen Distanzhalters (41) Durchbohrungen (44) zum Durchführen der an den vorhergehenden Distanzhaltern (41) befestigten länglichen Temperatursensoren (5) aufweist, wobei durch eine Durchbohrung (44) genau ein länglicher Temperatursensor (5) geführt ist, so dass die Anzahl der Durchbohrungen (44) eines Distanzhalters (4) der Anzahl der vorhergehenden Distanzhalter (41) entspricht; und
- einem Füllmaterial (6), welches zwischen den Distanzhaltern (4, 41) angeordnet ist und welches die länglichen Temperatursensoren (5) jeweils umschließt, wobei das Füllmaterial (6) eine geringere Wärmeleitfähigkeit als das Material der Distanzhalter (4, 41) aufweist.

2. Multipoint-Sensor (1) nach Anspruch 1, wobei das Füllmaterial (6) zusätzlich zwischen dem verschlossenen Endbereich (31) der Ummantelung (3) und dem dem verschlossenen Endbereich (31) am nächsten gelegenen Distanzhalter (41) angeordnet ist.

3. Multipoint-Sensor (1) nach Anspruch 1, wobei der dem verschlossenen Endbereich (31) am nächsten gelegene Distanzhalter (41) direkt an dem verschlossenen Endbereich (31) positioniert ist.

4. Multipoint-Sensor (1) nach zumindest einem der vorherigen Ansprüche, wobei die Distanzhalter (4, 41) aus einem thermisch leitfähigen keramischen Material gefertigt sind.

5. Multipoint-Sensor (1) nach Anspruch 4, wobei es sich bei dem thermisch leitfähigen keramischen Material um Bornitrid handelt.

6. Multipoint-Sensor (1) nach einem der vorherigen Ansprüche, wobei es sich bei dem Füllmaterial (6) um ein Pulver handelt.

7. Multipoint-Sensor (1) nach Anspruch 6, wobei das Pulver aus einem keramischen Material besteht.

8. Multipoint-Sensor (1) nach einem der Ansprüche 6 oder 7, wobei das Pulver aus Aluminiumoxid besteht.

9. Multipoint-Sensor (1) nach einem der vorherigen Ansprüche, wobei die Ummantelung (3) aus einem festen, biegsamen Material gefertigt ist.

10. Verfahren zur Herstellung eines Multipoint-Sensors (1) nach zumindest einem der vorherigen Ansprüche, umfassend die folgenden Schritte:

    - Sukzessives Positionieren und Befestigen der temperatursensitiven Komponente (51, 52) der länglichen Temperatursensoren (5) in der jeweiligen Vertiefung (43) der Distanzelemente (4);
    - Sukzessives Einsetzen der Distanzhalter (4, 41) in die Ummantelung (3) derart, dass mit Ausnahme des zu dem verschlossenen Endbereich (31) am nächsten gelegenen Distanzhalters (41) durch jede der Durchbohrungen (44) jeweils genau ein länglicher Temperatursensor (5) geführt ist;
    - Sukzessives Einfüllen des Füllmaterials (6) zwischen zwei aufeinanderfolgenden Distanzhaltern (4, 41), so dass das Füllmaterial (6) die länglichen Temperatursensoren (5) jeweils umschließt; und
    - Verschließen der Ummantelung (3) an ihrem dem geschlossenen Endbereich (31) gegenüberliegenden offenen Endbereich.

11. Verfahren nach Anspruch 10, wobei für den Fall, dass es sich bei dem Füllmaterial (6) um ein Pulver handelt, der Multipoint-Sensor (1) während des Einfüllens und/oder nach jedem Einfüllen des Pulvers gerüttelt wird.

12. Verfahren nach Anspruch 10 oder 11, wobei die Befestigung der jeweiligen temperatursensitiven Komponente (51, 52) eines länglichen Temperatursensors (5) in der jeweiligen Vertiefung (43) eines Distanzhalters (4, 41) mittels eines Klebstoffs, insbesondere mittels eines wärmeleitfähigen keramischen Klebstoffs, erfolgt.

13. Verfahren nach zumindest einem der Ansprüche 10 bis 12, wobei das Einfüllen des (6) Füllmaterials mithilfe einer Kapillare erfolgt.

14. Verfahren nach zumindest einem der Ansprüche 10 bis 13, wobei das Füllmaterial (6) zusätzlich zwischen dem verschlossenen Endbereich (31) der Ummantelung (3) und dem dem verschlossenen Endbereich (31) am nächsten gelegenen Distanzhalter (41) eingefüllt wird.

15. Verfahren nach zumindest einem der Ansprüche 10 bis 13, wobei der dem verschlossenen Endbereich (31) am nächsten gelegene Distanzhalter (41) direkt an dem verschlossenen Endbereich (31) positioniert wird.

**Claims**

1. Multipoint sensor (1) designed to determine a temperature profile of a medium, said profile consisting of multiple measuring points (2, 21), said sensor comprising:

    - a tubular jacket (3) with a sealed end area (31);
    - n cylindrical spacers (4, 41) with n > 1, n ∈ N, which are made from a material with a high thermal conductivity,
    wherein the outer diameter (42) of each spacer (4, 41) essentially corresponds to the internal diameter (32) of the jacket (3),
    wherein the spacers (4, 41) are axially spaced behind one another in the interior of the jacket (3),
    wherein every spacer (4, 41) contains a cavity (43) designed to accommodate one temperature-sensitive component (51, 52) of an elongated temperature sensor (5), permitting, in each case, the recording of one measuring point (2, 21) of the temperature profile,
    wherein, with the exception of the spacer (41) closest to the sealed end area (31), each of the spacers (4) has through-holes (44) designed to guide the elongated temperature sensors (5) secured to the preceding spacers (41),
    wherein exactly one elongated temperature sensor (5) is guided through a through-hole (44), such that the number of through-holes (44) of a spacer (4) corresponds to the number of preceding spacers (41), and
    - a filler material (6), which is arranged between the spacers (4, 41) and which surrounds the elongated temperature sensors (5) in each case, wherein the filler material (6) has a lower thermal conductivity than the material of the spacers (4, 41).

2. Multipoint sensor (1) as claimed in Claim 1, wherein the filler material (6) is additionally arranged between the sealed end section (31) of the jacket (3) and the spacer (41) that is closest to the sealed end area (41).

3. Multipoint sensor (1) as claimed in Claim 1, wherein the spacer (41) closest to the sealed end area (31) is positioned directly on the sealed end area (31).

4. Multipoint sensor (1) as claimed in at least one of the previous claims, wherein the spacers (4, 41) are made from a thermally conductive ceramic material.

5. Multipoint sensor (1) as claimed in Claim 4, wherein the thermally conductive ceramic material is boron nitride.

6. Multipoint sensor (1) as claimed in one of the previous claims, wherein the filler material (6) is a powder.

7. Multipoint sensor (1) as claimed in Claim 6, wherein the powder consists of a ceramic material.

8. Multipoint sensor (1) as claimed in one of the Claims 6 or 7, wherein the powder consists of aluminum oxide.

9. Multipoint sensor (1) as claimed in one of the previous claims, wherein the jacket (3) is made from a solid, flexible material.

10. Procedure to fabricate a multipoint sensor (1) as claimed in at least one of the previous claims, said procedure comprising the following steps:

    - Successive positioning and fixation of the temperature-sensitive components (51, 52) of the elongated temperature sensors (5) in the relevant cavity (43) of the spacer elements (4) ;
    - Successive insertion of the spacers (4, 41) in the jacket (3) in such a way that, with the exception of the spacer (41) closest to the sealed end area (31), exactly one elongated temperature sensor (5) is guided through each of the through-holes (44) ;
    - Successive filling of the filler material (6) between two consecutive spacers (4, 41) such that the filler material (6) surrounds the elongated temperature sensors (5); and
    - Sealing of the jacket (3) at its open end area which is opposite to the closed end area (31).

11. Procedure as claimed in Claim 10, wherein, if the filler material (6) is a powder, the multipoint sensor (1) is shaken during the filling process and/or after each filling of the powder.

12. Procedure as claimed in Claim 10 or 11, wherein the temperature-sensitive component (51, 52) of an elongated temperature sensor (5) is secured in the relevant cavity (43) of a spacer (4, 41) by means of an adhesive, particularly by means of a thermally conductive ceramic adhesive.

13. Procedure as claimed in at least one of the Claims 10 to 12, wherein the filler material (6) is filled using a capillary.

14. Procedure as claimed in at least one of the Claims 10 to 13, wherein the filler material (6) is additionally filled in between the sealed end area (31) of the jacket (3) and the spacer (41) closest to the sealed end area (31).

15. Procedure as claimed in at least one of the Claims 10 to 13, wherein the spacer (41) closest to the sealed end area (31) is positioned directly on the sealed end area (31).

## Revendications

1. Capteur multipoint (1) destiné à la détermination d'un profil de température d'un produit, lequel profil est constitué d'un ou de plusieurs points de mesure (2, 21), le quel capteur comprend :

   - une enveloppe tubulaire (3) avec une zone d'extrémité fermée (31) ;
   - n entretoises cylindriques (4, 41) avec n > 1, n ∈ N, lesquelles sont fabriquées à partir d'un matériau présentant une conductivité thermique élevée,
   le diamètre extérieur (42) de chaque entretoise (4, 41) correspondant pour l'essentiel au diamètre intérieur (32) de l'enveloppe (3),
   les entretoises (4, 41) étant disposées axialement les unes derrière les autres dans l'espace intérieur de l'enveloppe (3),
   chacune des entretoises (4, 41) contenant une cavité (43) destinée à recevoir respectivement un composant sensible à la température (51, 52) d'un capteur de température allongé (5), permettant d'acquérir respectivement un point de mesure (2, 21) du profil de température,
   chacune des entretoises (4), à l'exception de l'entretoise (41) la plus proche de la zone d'extrémité fermée (31), présente des trous traversants (44) destinés au guidage des capteurs de température allongés (5) fixés sur les entretoises (41) précédentes,
   exactement un capteur de température allongé (5) étant guidé à travers un trou traversant (44), si bien que le nombre de trous traversants (44) d'une entretoise (4) correspond au nombre des entretoises (41) précédentes, et
   - un matériau de remplissage (6), lequel est disposé entre les entretoises (4, 41) et lequel enferme les capteurs de température allongés (5), le matériau de remplissage (6) présentant une conductivité thermique inférieure au matériau des entretoises (4, 41).

2. Capteur multipoint (1) selon la revendication 1, pour lequel le matériau de remplissage (6) est disposé en plus entre la zone d'extrémité fermée (31) de l'enveloppe (3) et la zone d'extrémité fermée (31) au niveau de l'entretoise (41) la plus proche.

3. Capteur multipoint (1) selon la revendication 1, pour lequel l'entretoise (41) la plus proche de la zone d'extrémité fermée (31) est positionnée directement sur la zone d'extrémité fermée (31).

4. Capteur multipoint (1) selon au moins l'une des revendications précédentes, pour lequel les entretoises (4, 41) sont fabriquées à partir d'un matériau céramique thermoconducteur.

5. Capteur multipoint (1) selon la revendication 4, pour lequel, concernant le matériau céramique thermoconducteur, il s'agit de nitrure de bore.

6. Capteur multipoint (1) selon au moins l'une des revendications précédentes, pour lequel, concernant le matériau de remplissage, il s'agit d'une poudre.

7. Capteur multipoint (1) selon la revendication 6, pour lequel la poudre est constituée d'un matériau céramique.

8. Capteur multipoint (1) selon l'une des revendications 6 ou 7, pour lequel la poudre est constituée d'oxyde d'aluminium.

9. Capteur multipoint (1) selon au moins l'une des revendications précédentes, pour lequel l'enveloppe (3) est fabriquée à partir d'un matériau solide et flexible.

10. Procédé destiné à la fabrication d'un capteur multipoint (1) selon au moins l'une des revendications précédentes, comprenant les étapes suivantes :

    - Positionnement et fixation successifs des composants (51, 52) sensibles à la température des capteurs de température allongés (5), dans la cavité (43) des entretoises (4) ;
    - Insertion successive des entretoises (4, 41) dans l'enveloppe (3) de telle sorte qu'à l'exception de la zone d'extrémité fermée (31) au niveau de l'entretoise (41) la plus proche, exactement un capteur de température allongé (5) est guidé à travers chacun des trous traversants (44) ;
    - Remplissage successif du matériau de remplissage (6) entre deux entretoises (4, 41) consécutives, si bien que le matériau de remplissage (6) enferme chacun des capteurs de température allongés (5) ; et
    - Fermeture de l'enveloppe (3) au niveau de sa zone d'extrémité ouverte située à l'opposé de sa zone d'extrémité fermée.

**11.** Procédé selon la revendication 10, pour lequel pour le cas où, concernant le matériau de remplissage (6), il s'agit d'une poudre, le capteur multipoint (1) est agité pendant le remplissage et/ou après chaque remplissage de la poudre.

**12.** Procédé selon la revendication 10 ou 11, pour lequel la fixation des composants sensibles à la température (51, 52) respectifs d'un capteur de température allongé (5) s'effectue dans la cavité (43) respective d'une entretoise (4, 41) au moyen d'une colle, notamment au moyen d'une colle céramique thermoconductrice.

**13.** Procédé selon au moins l'une des revendications 10 à 12, pour lequel le remplissage du matériau de remplissage (6) s'effectue à l'aide d'un capillaire.

**14.** Procédé selon au moins l'une des revendications 10 à 13, pour lequel le matériau de remplissage (6) est rempli en plus entre la zone d'extrémité fermée (31) de l'enveloppe (3) et la zone d'extrémité fermée (31) au niveau de l'entretoise (41) la plus proche.

**15.** Procédé selon au moins l'une des revendications 10 à 13, pour lequel l'entretoise (41) la plus proche de la zone d'extrémité fermée (31) est positionnée directement sur la zone d'extrémité fermée (31).

Fig. 1

Fig. 2a

Fig. 2b

Fig. 2c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202011001277